# EUROPEAN PATENT APPLICATION

(11) **EP 2 933 073 A1**
(43) Date of publication of application: **21.10.2015**
(21) Application number: 15163765.9
(22) Date of filing: 15.04.2015
(51) Int. Cl.: B26F 1/38, B26F 1/32, B26D 5/10, B26D 7/27

(54) **DEVICE FOR CUTTING AND ARRANGING A VAPOUR BARRIER AROUND DEVICE BOX**

(30) Priority: 15.04.2014 SE 1450464
(71) Applicant: JIJ Plast AB, 253 73 Helsingborg (SE)
(72) Inventor: Persson, Sten, SE-755 92 Uppsala (SE); Örtengren, Christer, SE-122 42 Enskede (SE); Johannesson, Jan, SE-252 70 RÅÅ (SE)
(74) Representative: Ström & Gulliksson AB

(57) **Abstract**

An assembly of a foil cutter (200) for cutting openings in a vapor barrier covering a device box and a holding part is provided. The foil cutter (200) comprises a grip (240), a cylindrical portion (210) and a front surface (230) provided with cutting implements for cutting an opening in the vapor barrier upon rotation of the foil cutter. The cylindrical portion (210) has a size such that it fits in an opening limited by a an inner cylindrical surface (380) of the holding part (300), the holding part further being provided with a locating surface (350) and an annular holding surface (340) adapted to center the holding part (200) and its opening limited by the cylindrical portion (210) thereof over the device box when the holding part (200) is pressed against the device box.

## Description

### FIELD OF THE INVENTION

The present invention relates to an assembly of a foil cutter for cutting openings in a vapor barrier covering a device box and a holding part, the foil cutter comprising a grip, a cylindrical portion and a front surface provided with cutting implements for cutting an opening in the vapor barrier upon rotation of the foil cutter, wherein the cylindrical portion has a size such that it fits in an opening limited by a an inner cylindrical surface of the holding part, the holding part further being provided with a locating surface and an annular holding surface adapted to center the holding part and its opening limited by the cylindrical portion thereof over the device box when the holding part is pressed against the device box.

### PRIOR ART

When building walls in homes, an electric system is often provided for in the walls. Such electric systems generally comprise a basic structure with pipes accommodating single wire conductors, wherein the pipes are connected in device boxes allowing for connection of the conductors and for mounting of e.g. plugs and light switches in the wall.

Modem walls are well insulated, mostly with a material allowing for air vapor transport through the wall. However, if hot, moist inside air is allowed to travel through the wall, there is a risk of the moisture in the air will condense and form drops of water within the wall, which might lead to damages and/or buildup of mold.

In order to mitigate the problems with moist air travelling through the wall, a vapor barrier may be installed in the wall. The vapor barrier is often in the form of an aging resistant and water/air impermeable plastic foil, and is mounted close to an inner wall surface. However, it is a long known problem that the plastic foil must be penetrated in order to allow for the device boxes to extend to the inner wall surface. Until now, the penetration of the plastic has usually been achieved by the carpenter using a knife such that the device box can extend through the plastic foil. In order to avoid leakage of moist air in the penetrated area, special tape has been used, but the result has been far from satisfying - it is simply very difficult to achieve a tight seal using tape.

Also, it is necessary to provide the seal around the device boxes prior to e.g. a plaster board is mounted as an inner wall surface. In this context, it is suitable to mention a relatively new method of providing the openings accommodating the device boxes; rather than measuring the exact position of the device box using a rule and transfer it position to the plaster board, a powerful magnet is attached to the center of the device box, after which the plaster board is held in its intended position against the wall and the device box. Thereafter, a counter magnet is used to pinpoint the exact location of the magnet attached to the device box, and this position on the plaster board is used as a center mark for a subsequent drilling operation.

Then, the plaster board is screwed and/or glued to the studs in the wall.

It is the object of the present invention to provide a device and a method for reducing the steps required to provide a reliable seal between the vapor barrier and the device box.

### SUMMARY OF THE INVENTION

The above object is solved by the above disclosed assembly of a foil cutter for cutting openings in a vapor barrier covering a device box and a holding part, the foil cutter comprising a grip, a cylindrical portion and a front surface provided with cutting implements for cutting an opening in the vapor barrier upon rotation of the foil cutter, wherein the cylindrical portion has a size such that it fits in an opening limited by a an inner cylindrical surface of the holding part, the holding part further being provided with a locating surface and an annular holding surface adapted to center the holding part and its opening limited by the cylindrical portion thereof over the device box when the holding part is pressed against the device box.

In order to provide for the cutting, the cutting implement may be at least one knife.

In order to avoid overstretching of the foil, the foil cutter may be prevented from being too far inserted into the opening limited by the cylindrical portion by cooperation between a an annular stop surface of the holding part and a corresponding stop surface of the foil cutter.

In order to facilitate threading of the foil, the assembly may comprise a foil threader having an inner cylindrical surface in which an outer cylindrical surface of the holding part can be inserted, wherein the foil threader can be used to thread the foil over the device box after the opening in the vapor barrier foil has been cut by pushing the foil over the device box.

In order to allow for the assembly to be used for twin-mounted device boxes, an opening may be provided in the annular holding surface, said opening allowing for the holding surface to engage a device box even if the device box is twin mounted to another device box.

### BRIEF DESCRIPTION OF THE DRAWINGS

In the following, the invention will be described with reference to the appended drawings, wherein:
Fig. 1a is a perspective view showing an operation end of one embodiment of a vapor barrier cutter according to the present invention,
Fig. 1b is a perspective view showing one embodiment of a cutting and seal providing end of the vapor barrier cutter according to the present invention,
Fig. 2 is a side section view of one embodiment of a vapor barrier cutter according to the present invention,
Fig. 3 is an exploded section view of one embodiment of a vapor barrier cutter according to the present invention,
Fig. 4 is a perspective view of a second embodiment of a vapor barrier cutter according to the present invention,
Fig. 5 is a perspective view of the second embodiment of the a vapor barrier cutter according to the present invention,
Fig. 6 is a side view of the second embodiment of the a vapor barrier cutter according to the present invention, and
Fig.7 is a side view of the second embodiment of the a vapor barrier cutter according to the present invention.

### DESCRIPTION OF EMBODIMENTS

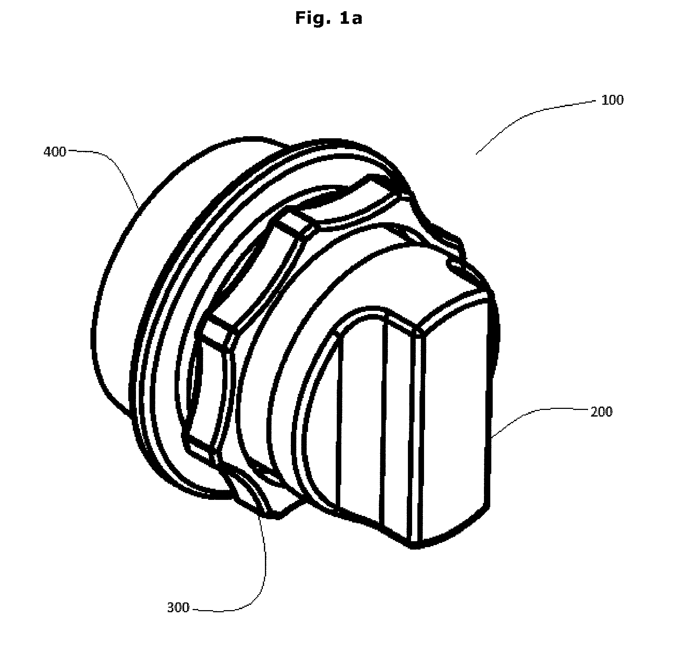

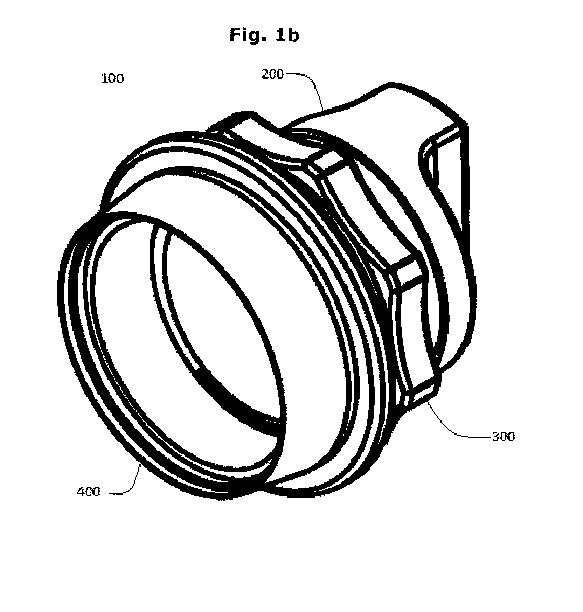

With reference to Figs. 1 a and 1b, a vapor barrier cutter 100 comprises a cutting part 200, a holding part 300 and a foil threader 400. The cutting part 200 can be inserted into an opening in the holding part 300 and the holding part can be inserted into an opening in the foil threader 400 in a way to be disclosed later.

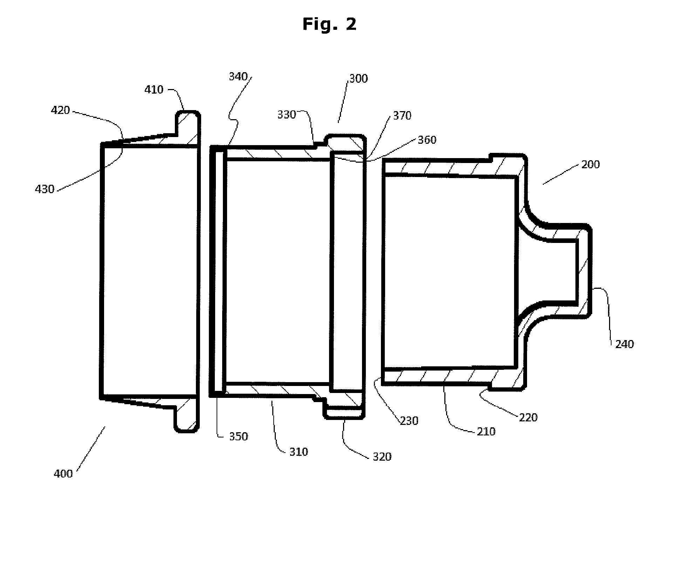

With reference to Fig. 2, the cutting part 200 comprises an outer cylindrical surface 210, an annular stop surface 220 having a slightly larger diameter than the outer cylindrical surface 210, a front surface 230 and a grip 240 located on an opposite end relative to the front surface 230. The front surface 230 is provided with cutting implements (not shown) suitable for cutting plastic foil when the cutting part is rotated by a user gripping the grip 240.

Still with reference to Fig. 2, the holding part 300 comprises an outer cylindrical surface 310, a grip surface 320, an outer stop surface 330 having a slightly larger diameter than the outer cylindrical surface 310, an annular holding surface 340 being surrounded by a cylindrical locating surface 350 and an annular stop surface 360 neighboring an internal cylindrical surface 370. Moreover, the holding part comprises an inner cylindrical surface 380 neighboring the annular stop surface 360 and having a diameter corresponding to the inner diameter of the annular stop surface 360.

The foil threader 400 comprises an annular handle portion 410, a conically cylindrical outer surface 420 and an inner cylindrical surface 430.

When comparing the diameters of the annular and cylindrical surfaces described above, the outer cylindrical surface 210 of the foil cutter 200 fits within the space limited by the inner cylindrical surface 380 of the holding part 300 and the outer cylindrical surface 310 of the holding part 300 fits within the space limited by the inner cylindrical surface 430 of the foil threader 400. The annular stop surface 220 of the foil cutter 200 has inner and outer diameters corresponding to the inner and outer diameters of the annular stop surface 360 of the holding part 300; hence, there will be a limit on the insertable length of the foil cutter 200 with respect to the holding part 300.

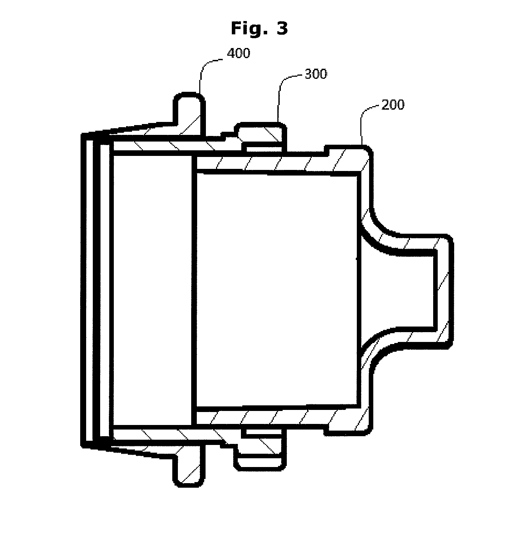

The cooperation between the annular and cylindrical surfaces of the foil cutter 200, the holding part 300 and the foil threader 400 is shown in Fig. 3. From figure 3, also the length of the cylindrical surface 210 of the foil cutter 200, the lengths of the inner cylindrical surface 380 and the outer cylindrical surface 310 of the holding part 300 and the length of the 430 of the foil threader 400 are shown. The length of the outer cylindrical surface 210 of the foil cutter 200, measured from the stop surface 200 to the front surface 230 is equal to, or slightly shorter than, the inner cylindrical surface 380 of the holding part 300, measured from the annular stop surface 360 to the annular holding surface 340. This means that the front surface 230 of the foil cutter 200 will be in level with the annular holding surface 340 of the holding part 300 when the vapor barrier cutter 100 is ready for use. The length of the inner cylindrical surface 430 of the foil threader is smaller than, or equal to, the length of the outer cylindrical surface 310 of the holding part 300, measured from the outer stop surface 330 to the annular holding surface 340.

Hence, when assembled for use, the foil cutter 200 will be inserted into the holding part 300, such that the front surface 230 will be about level with the locating surface 350. As mentioned, the front surface 350 is provided with cutting implements, e.g. knives or the like; these cutting implements will extend past the locating surface.

The above lengths and diameters have all been presented in relation to one another - however, the diameter of the locating surface 350 is such that it fits around a circular device bow, and the diameter of the annular holding surface is such that it will rest on a front face of the circular device box. One standardized diameter of device boxes is 70 millimeters.

The vapor barrier cutter according to the present invention is used in a way to be described; first, however, a slight background will be given. As mentioned in the prior art section, the most common way of installing electrical wiring is using device boxes (not shown) being interconnected by pipes or hoses (not shown) in order to allow for wiring extending between the device boxes. The device boxes are usually fastened by screws and/or nails to wall studs, and will extend a distance corresponding to the thickness of a wall board from a plane formed by neighboring wall studs. Insulation material is provided between the studs, and after the insulation, the device boxes and the pipes or tubes are arranged between the wall studs, a vapor barrier is fastened to cover the entire wall structure, such that vapor is prevented to travel through the insulation.

Now, in order to uncover the device box from the coverage of the vapor barrier, the vapor barrier cutter as described above may be used in the following way:

In a first step, the assembled vapor barrier cutter is pressed towards the face of the device box such that the annular holding surface engages the front surface of the device box and the locating surface 350 surrounds the front surface of the device box, such that the vapor barrier cutter is centered with respect to the device box. As mentioned, the vapor barrier is provided between the vapor barrier cutter and the device box. Due to the locating surface 350 centering the vapor barrier cutter 100 around the periphery of the device box, the vapor barrier will be slightly stretched.

In a second step, the foil cutter 200 will be rotated, preferably by the user holding the grip 240 of the foil cutter. The rotation will move the cutting implements over the foil and cut it, and the stretch of the foil induced by the locating surface 350 of the holding part 300 will assist in getting a clean cut of the foil. The cutting of the foil will form a circular opening in the foil, the opening being slightly smaller than the diameter of the device box.

In a third step, the foil is threaded over the device box by pushing the foil threader forwards, hence expanding the opening foil such that the opening in the foil can accommodate the device box.

In a fourth step, the vapor barrier cutter 100 is retracted.

By the device and the method disclosed above, a tight seal between a device box and a foil constituting a vapor barrier may be achieved in an effective manner. It should be noted that the vapor barrier cutter 100 and the method for its us are particularly useful in combination with the magnetic location device as described in the prior art section, since it is possible to cut the openings in the foil of the vapor barrier and thread it over the device box after a plaster board making up the inner wall surface of a wall has been fastened to the wall studs. Consequently, heavy lifts of plaster boards can be avoided.

It should be noted that the vapor barrier cutter 100 has been disclosed as comprising three parts, the foil cutter 200, the holding part 300 and the foil threader 400. It should be noted, however, that according to one embodiment of the invention, the foil threader is not necessary. Similar results may be achieved by using a longer locating surface 350 of the holding device 300.

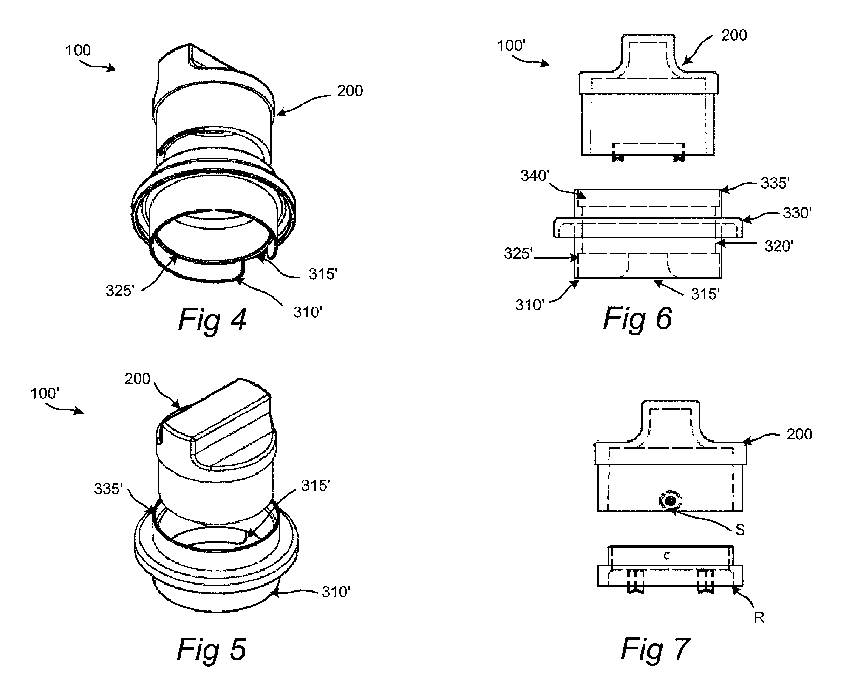

With reference to Figs. 4-7, an exemplary embodiment of a vapor barrier cutter 100'without a foil threader 400 is shown. The embodiment according to Figs. 4-6 comprises a foil cutter being identical to the foil cutter 200 of the previously disclosed embodiments, but the holding part of this embodiment differs significantly from the holding part 300 of the previous embodiments. Moreover, as mentioned, the embodiment according to Figures 4-7 does not comprise a foil threader.

Hereinafter, the components differing from the previously disclosed embodiment will be described in more detail:
A cutting device 100' according to the embodiment shown in Figs. 4-6 comprises a foil cutter 200 being identical to the foil cutter disclosed above. Also, the cutting device 100' comprises a holding part 300', which comprises a combined holding and foil threading portion 310'having an inner diameter such that it fits over a device box. An opening 315' is provided for allowing the combined holding and foil threading portion 310' to slip over a device box even if the device box is twin mounted to another device box, a situation far from rare. A similar opening may be provided for in the foil threader 400 of the previous embodiments.

The holding part 300' also comprises a control portion 320' having a slightly smaller diameter than the device box, but sufficiently large to accommodate a corresponding outer surface of the foil cutter 200. A transition portion 325' between the control portion 320' and the combined holding and foil threading portion 310' serves to limit the combined holding and foil threading portion 310' from being slipped over the device box too far.

The holding part 300' also comprises a handle portion 330' and a second control portion 335', whose inner diameter is such that it accommodates a corresponding portion of the foil cutter 200. A transition portion 340' of the holding part 300' cooperates with a corresponding transition portion of the foil cutter 200 such that the foil cutter 200 may not be too much inserted into the holding part 300'

The cutting device 100' is used in a similar fashion as the cutting device 100 according to the previously disclosed embodiments:
In a first step, the combined holding and foil threading portion 310'of the holding part 300' is pressed towards a device box (not shown), wherein the foil to be cut is stretched slightly over the device box;
In a second step, the foil cutter 200 is inserted into the holding part and rotated to cut a circular opening in the foil;
In a third step, the holding part 300is pressed such that the foil is threaded over the device box; It should be noted that the transition portion 325' stops the holding part from threading the foil too far over the device box.

In a fourth step, the holding part is withdrawn.

In one embodiment, common for both the embodiment of Figs. 1-3 and the embodiment of Figs. 4-7, the foil cutter 200 is provided with exchangeable cutting implements. One embodiment thereof is shown in Fig. 7, wherein the cutting implements are provided in a ring R, which can be locked to engagement with the foil cutter 200, e.g. by a stop screw S.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An assembly (100, 100') of a foil cutter (200) for cutting openings in a vapor barrier covering a device box and a holding part, the foil cutter (200) comprising a grip (240), a cylindrical portion (210) and a front surface (230) provided with cutting implements for cutting an opening in the vapor barrier upon rotation of the foil cutter, wherein the cylindrical portion (210) has a size such that it fits in an opening limited by a an inner cylindrical surface (380) of the holding part (300), the holding part further being provided with a locating surface (350) and an annular holding surface (340; 340') adapted to center the holding part (200) and its opening limited by the cylindrical portion (210) thereof over the device box when the holding part (200) is pressed against the device box.

2. The assembly of claim 1, wherein the cutting implement is at least one knife.

3. The assembly of claim 1 or 2, wherein the foil cutter (200) is prevented from being too far inserted into the opening limited by the cylindrical portion (310; 310') by cooperation between a an annular stop surface (360) of the holding part (300) and a corresponding stop surface (220) of the foil cutter (200).

4. The assembly of any of the preceding claims, further comprising a foil threader (400) having an inner cylindrical surface (430) in which an outer cylindrical surface (310) of the holding part (300) can be inserted, wherein the foil threader (400) can be used to thread the foil over the device box after the opening in the vapor barrier foil has been cut by pushing the foil over the device box.

5. The assembly of any of the claims 1-4, wherein an opening (315') is provided in the annular holding surface (340, 340'), said opening (315) allowing for the holding surface to engage a device box even if the device box is twin mounted to another device box.
